# EUROPEAN PATENT APPLICATION

(11) **EP 2 334 130 A1**
(43) Date of publication of application: **15.06.2011**
(21) Application number: 10194116.9
(22) Date of filing: 08.12.2010
(51) Int. Cl.: H04W 72/04

(54) **Radio base station and radio resource allocation method**

(30) Priority: 08.12.2009 JP 2009278739
(71) Applicant: NTT DoCoMo, Inc., Tokyo 100-6150 (JP)
(72) Inventor: Shirakabe, Masashige, Tokyo 100-6150 (JP); Asai, Takahiro, Tokyo 100-6150 (JP); Hanaki, Akihito, Tokyo 100-6150 (JP); Ofuji, Yoshiaki, Tokyo 100-6150 (JP)
(74) Representative: Schwabe - Sandmair - Marx

(57) **Abstract**

A radio base station of the present invention is provided with an index setting unit configured to set an index to a radio resource in a frequency domain, a resource allocation class determining unit is configured to determine a resource allocation class of a radio communication terminal from among resource allocation classes which are classified according to radio resource allocation patterns fixedly allocated at a fixed time interval T0, based on user information of the radio communication terminal, and a resource allocation unit configured to allocate a vacant radio resource within the fixed time interval T0 to the radio communication terminal in order starting with a radio resource having an index value predetermined for the resource allocation class.

## Description

### CROSS REFERENCE TO RELATED APPLICATION

This application is based upon and claims the benefit of priority from the prior Japanese Patent Application No. 2009-278739, filed on December 8, 2009; the entire contents of which are incorporated herein by reference.

### BACKGROUND OF THE INVENTION

### 1. Field of the invention

The present invention relates to a radio base station and a radio resource allocation method for fixedly allocating a radio resource to a radio communication apparatus at a fixed time interval.

### 2. Description of the Related Art

LTE (Long Term Evolution) uses OFDMA (Orthogonal Frequency Division Multiple Access) as a downlink modulation scheme and uses SC-FDMA (Single-Carrier Frequency-Division Multiple Access) as an uplink modulation scheme. Furthermore, LTE achieves high-speed packet communication using dynamic scheduling whereby radio resources are dynamically allocated in a time domain and a frequency domain based on instantaneous received channel quality in each subframe (e.g., 3GPP, TS36.213).

On the other hand, dynamic scheduling requires control information for feedback of received channel quality or for reporting of allocated radio resources to be transmitted for each subframe. For this reason, using dynamic scheduling for packet communication in which packet data in a small payload size is periodically generated as in the case of VolP (Voice over lP) increases control overhead relatively and decreases transmission efficiency. Thus, persistent scheduling is proposed for fixedly allocating radio resources in the frequency domain at a fixed time interval (e.g., 3GPP, R1-060099).

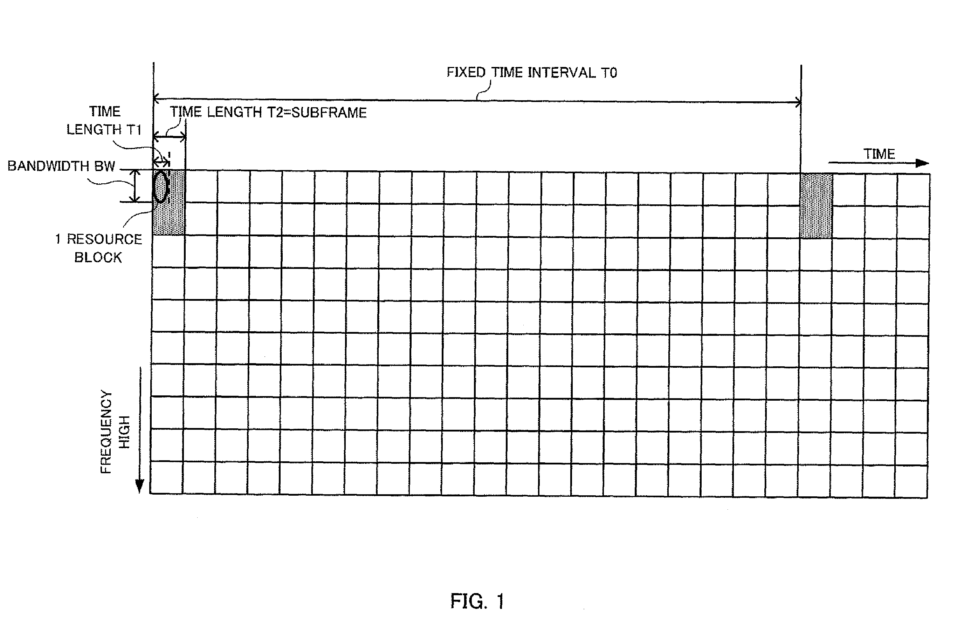

FIG.1 is a diagram showing an example of radio resource allocation using persistent scheduling. As shown in FIG.1, in persistent scheduling, one or a plurality of consecutive resource blocks in the frequency domain (two consecutive resource blocks in the frequency domain in FIG.1 are fixedly allocated to a radio communication terminal at a fixed time interval T0. Persistent scheduling does not require the control information to be transmitted for each subframe as in the case of dynamic scheduling, and can thereby reduce control overhead drastically,

Here, a "resource block" is a minimum unit for radio resource allocation in the frequency domain and one resource block has 180 kH bandwidth BW (12 subcarriers) in the frequency domain and has a time length T1 of 0.5 ms in the time domain. Furthermore, a "subframe" is a minimum unit for radio resource allocation in the time domain and one subframe has a time length T2 of 1 ms which is twice the time length of one resource block in the time domain. Scheduling is performed for each subframe in the time domain and by the resource block in the frequency domain.

Here, as a method for improving received channel quality of a radio communication terminal having poor received channel quality as in the case where the radio communication terminal locates at a cell edge, subframe bundling is standardized (e.g., 3GPP, TS36.321). In the subframe bundling, 1-packet data normally transmitted in 1 subframe is distributed and transmitted through a plurality of consecutive subframes, and that can thereby improve received channel quality.

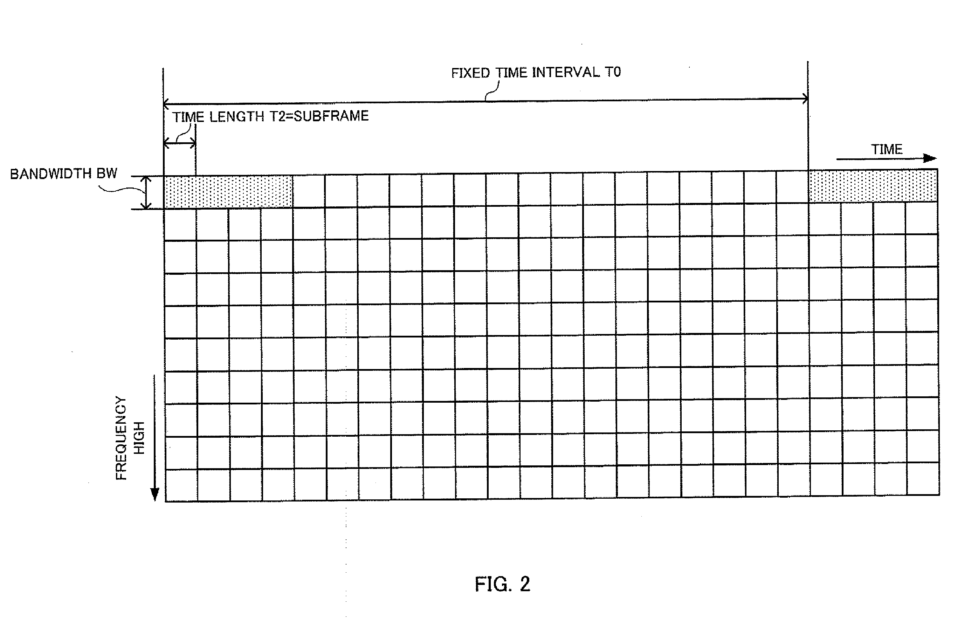

Furthermore, it is considered that the above described persistent scheduling is used for a radio communication terminal that applies subframe bundling. FIG.2 is a diagram illustrating an example of radio resource allocation using persistent scheduling for a radio communication terminal that applies subframe bundling. As shown in FlG.2, a plurality of consecutive subframes in the time domain (four consecutive subframes in the time domain in FlG.2) are fixedly allocated to a radio communication terminal that applies subframe bundling at a fixed time interval T0.

However, when persistent scheduling is used for both the aforementioned radio communication terminal that applies subframe bundling and a radio communication terminal that does not apply subframe bundling, since allocation patterns of resource blocks fixedly allocated at a fixed time interval are different, there are many vacant resource blocks that can be allocated to neither of the radio communication terminals.

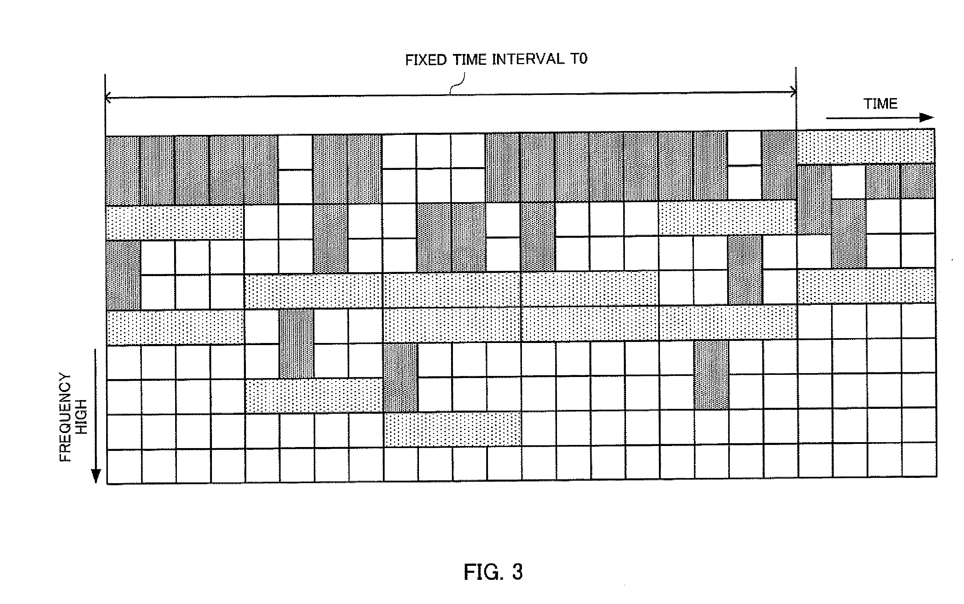

For example, as shown in FIG.3, when an allocation pattern of allocating one resource block in a frequency domain and four consecutive subframes in a time domain is applied to a radio communication terminal that applies subframe bundling and an allocation pattern of allocating two consecutive resource blocks in a frequency domain and one subframe in a time domain is applied to a radio communication terminal that does not apply subframe bundling, it is not possible to retain four consecutive subframes in the time domain or two consecutive resource blocks in the frequency domain, resulting in many vacant resource blocks that can be allocated to neither of the radio communication terminals.

Thus, when there is a mixture of a plurality of radio communication terminals having different allocation patterns of resource blocks fixedly allocated at a fixed time interval, many vacant resource blocks which can be allocated to neither of the radio communication terminals results causes decrease of the system throughput.

### SUMMARY OF THE INVENTION

The present invention has been implemented in view of the above described problem and it is an object of the present invention to provide a radio base station and a radio resource allocation method capable of preventing decrease of the system throughput caused by many vacant resource blocks that cannot be allocated to any of the radio communication terminals, when there is a mixture of a plurality of radio communication terminals having different allocation patterns of resource blocks fixedly allocated at a fixed time interval.

The radio base station of the present invention is a radio base station for fixedly allocating a radio resource to a radio communication terminal at a fixed time interval, including an index setting unit configured to set an index to a radio resource in a frequency domain, a resource allocation class determining unit configured to determine a resource allocation class of the radio communication terminal from among resource allocation classes which are classified according to radio resource allocation patterns fixedly allocated at the fixed time interval, based on user information of the radio communication terminal and a resource allocation unit configured to allocate a vacant radio resource within the fixed time interval to the radio communication terminal in order starting with a radio resource having an index value predetermined for the resource allocation class.

Furthermore, in the above described radio base station of the present invention, the resource allocation classes may be classified into a first resource allocation class and a second resource allocation class, the resource allocation unit may be configured to allocate a vacant radio resource within the fixed time interval to a radio communication terminal of the first resource allocation class in order starting with a radio resource having a smallest index value and allocate a vacant radio resource within the fixed time interval to a radio communication terminal of a second resource allocation class in order starting with a radio resource having a largest index value.

Furthermore, in the above described radio base station of the present invention, the index setting unit may be configured to set the index in ascending order of frequency starting with a radio resource having a lowest frequency or in descending order of frequency starting with a radio resource having a highest frequency.

Furthermore, in the above described radio base station of the present invention, the index setting unit may be configured to set the index in ascending order of frequency or in descending order of frequency starting with a radio resource of a frequency different from that of an adjacent radio base station.

Furthermore, in the above described radio base station of the present invention, the index setting unit may be configured to set the index so that radio resources allocated to radio communication terminals of all resource allocation classes are concentrated on any one of a lower frequency domain and a higher frequency domain.

Furthermore, in the above described radio base station of the present invention, the index setting unit may be configured to set the index for each subframe which is a unit of a radio resource in a time domain, based on a predetermined frequency hopping pattern.

Furthermore, in the above described radio base station of the present invention, the resource allocation classes have priorities and the resource allocation unit may be configured to preferentially allocate a vacant radio resources within the fixed time interval to a radio communication terminal of a resource allocation class having a higher priority.

Furthermore, in the above described radio base station of the present invention, when there are a plurality of vacant radio resources having index values predetermined for respective resource allocation classes within the fixed time interval, the resource allocation unit may be configured to allocate to the radio communication terminal any one of a radio resource at a earliest time, a radio resource of a time having maximum number of vacant radio resources in the frequency domain and a radio resource of a time having minimum number of radio resources allocated to radio communication terminals of same resource allocation class.

The radio resource allocation method of the present invention is a radio resource allocation method in which a radio base station fixedly allocates a radio resource to a radio communication terminal at a fixed time interval, including setting an index to a radio resource in a frequency domain, determining a resource allocation class of the radio communication terminal from among resource allocation classes which are classified according to radio resource allocation patterns fixedly allocated at the fixed time interval, based on user information of the radio communication terminal and allocating a vacant radio resource within the fixed time interval to the radio communication terminal in order starting with a radio resource having an index value predetermined for the resource allocation class.

### BRIEF DESCRIPTION OF THE DRAWINGS

The various features of novelty which characterize the invention are pointed out with particularity in the claims attached to and forming a part of this specification. For a better understanding of the invention, its operating advantages, and specific objects attained by its use, reference should be had to the accompanying drawing and descriptive matter in which there is illustrated and described a preferred embodiment of the invention.

FIG.1 is a diagram illustrating an example of conventional allocation of resource blocks;
FIG.2 is a diagram illustrating another example of conventional allocation of resource blocks;
FIG.3 is a diagram illustrating a further example of conventional allocation of resource blocks;
FIG.4 is a configuration diagram of a radio communication system according to a first embodiment of the present invention;
FIG.5 is a functional block diagram of a radio base station according to the first embodiment of the present invention;
FIG.6 is a diagram illustrating an example of allocation of resource blocks according to the first embodiment of the present invention;
FIG.7 is a flowchart illustrating a resource block allocation method according to the first embodiment of the present invention;
FIG.8 is a diagram illustrating an example of allocation of resource blocks according to modification example 1 of the present invention;
FIG.9 is a diagram illustrating an example of allocation of resource blocks according to modification example 2 of the present invention;
FIG.10 is a diagram illustrating an example of allocation of resource blocks according to modification example 3 of the present invention;
FIG.11 is a diagram illustrating frequency hopping according to a second embodiment of the present invention;
FIG.12 is a diagram illustrating an example of allocation of resource blocks according to a second embodiment of the present invention; and
FIG.13 is a diagram illustrating an example of allocation of resource blocks according to a third embodiment of the present invention.

### DETAILED DESCRIPTION OF THE INVENTION

Hereinafter, embodiments of the present invention will be described. In the descriptions of the following drawings, the same or similar parts will be assigned the same or similar reference numerals.

### [First embodiment]

### <Overall schematic configuration of radio communication

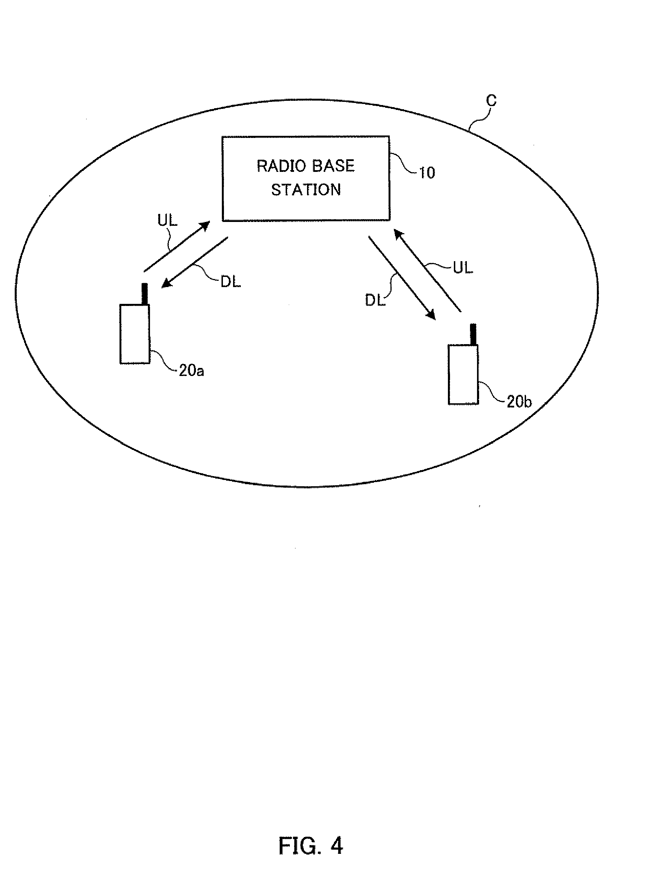

FIG.4 is a configuration diagram of a radio communication system according to a first embodiment. As shown in FIG.4, the radio communication system includes a radio base station 10 and radio communication terminals 20a and 20b that communicate with the radio base station 10 within a cell C formed by the radio base station 10.

The radio base station 10 fixedly allocates resource blocks (radio resources) in a frequency domain and a time domain to the radio communication terminals 20a and 20b at a fixed time interval by using persistent scheduling. The radio base station 10 transmits/receives packet data generated periodically such as VolP data to/from the radio communication terminals 20a and 20b by using resource blocks allocated on an uplink UL and a downlink DL respectively.

FIG.4 only shows the two radio communication terminals 20a and 20b for convenience of explanation, but the radio base station 10 can communicate with three or more radio communication terminals 20. Furthermore, the radio base station 10 can also communicate with the radio communication terminals 20 by using dynamic scheduling.

### configuration of radio base

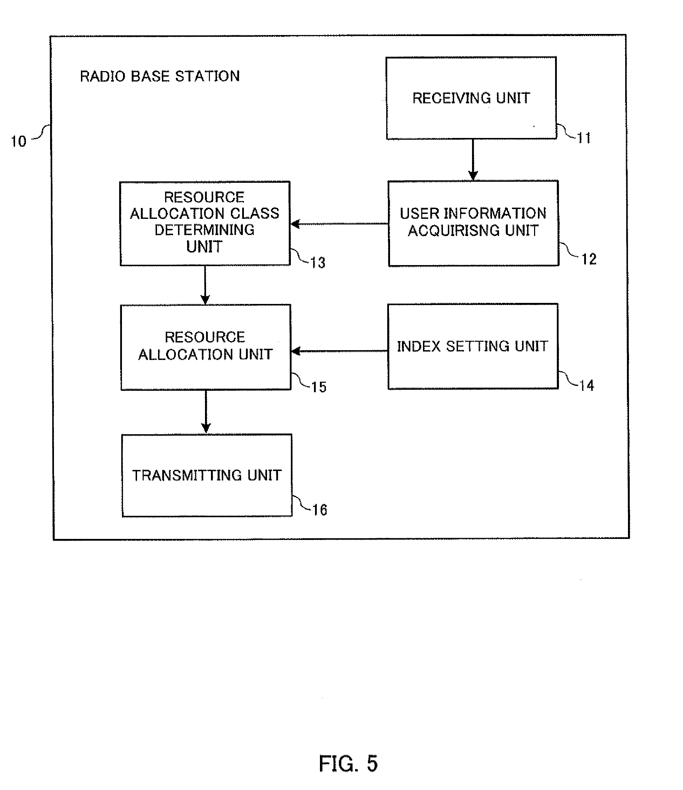

Next, the configuration of the radio base station 10 according to the first embodiment will be described. The radio base station 10 is physically an apparatus provided with an antenna, a modulator/demodulator, a CPU and a memory or the like. FIG.5 is a functional configuration diagram of the radio base station 10 according to the first embodiment.

As shown in FIG.5, the radio base station 10 is provided with a receiving unit 11, a user information acquiring unit 12, a resource allocation class determining unit 13, an index setting unit 14, a resource allocation unit 15 and a transmitting unit 16.

The receiving unit 11 receives an uplink signal from the radio communication terminal 20 and performs demodulation, decoding processing or the like. Furthermore, the receiving unit 11 measures received channel quality of the received uplink signal. Furthermore, the receiving unit 11 receives received channel quality of a downlink signal measured by the radio communication terminal 20 from the radio communication terminal 20.

The user information acquiring unit 12 acquires user information of the radio communication terminal 20. The "user information" refers to information for determining a resource allocation class (which will be described later) of the radio communication terminal 20, for example, receiving power, received channel quality such as reception SINR (Signal-to-lnterference and Noise power Ratio), propagation attenuation, and traffic type that identifies traffic such as voice, data and video.

For example, the user information acquiring unit 12 acquires received channel quality of an uplink signal measured by the receiving unit 11. Furthermore, the user information acquiring unit 12 acquires received channel quality of a downlink signal received by the receiving unit 11. Furthermore, the user information acquiring unit 12 may also acquire a traffic type of an uplink signal or downlink signal by a notification from an upper apparatus of the radio base station 10 or the radio communication terminal 20.

The resource allocation class determining unit 13 determines a resource allocation class of the radio communication terminal 20 based on the user information acquired by the user information acquiring unit 12. Here, the "resource allocation classes" are classified based on allocation pattern of resource blocks fixedly allocated at a fixed time interval.

The resource allocation classes are classified into a non-subframe bundling class (first resource allocation class) and a subframe bundling class (second resource allocation class). The non-subframe bundling class has an allocation pattern whereby one or a plurality of consecutive resource blocks in the frequency domain are fixedly allocated at a fixed time interval is applied, that is, subframe bundling is not applied to the non-subframe bundling class. The subframe bundling class has an allocation pattern whereby resource blocks of a plurality of consecutive subframes in the time domain are fixedly allocated at a fixed time interval is applied, that is, subframe bundling is applied to the subframe bundling class.

The resource allocation classes is not limited to the two classes of the subframe bundling class and the non-subframe bundling class, but may include three or more classes. For example, the subframe bundling class may further be classified based on allocation patterns of resource blocks fixedly allocated at a fixed time interval. Likewise, the non-subframe bundling class may further be classified based on allocation patterns. Hereinafter, a case will be described as an example where resource allocation classes are classified into two classes of a subframe bundling class and a non-subframe bundling class.

The resource allocation class determining unit 13 determines a resource allocation class of the radio communication terminal 20 based on whether or not the received channel quality acquired by the user information acquiring unit 12 is equal to or above a predetermined threshold. When, for example, the received channel quality is equal to or above the predetermined threshold, the resource allocation class determining unit 13 determines a non-subframe bundling class as the resource allocation class of the radio communication terminal 20. On the other hand, when the received channel quality is less than the predetermined threshold, the resource allocation class determining unit 13 determines a subframe bundling class as the resource allocation class of the radio communication terminal 20.

Furthermore, the resource allocation class determining unit 13 may also determine the resource allocation class of the radio communication terminal 20 based on whether the traffic type acquired by the user information acquiring unit 12 is data or voice. In this case, when the traffic type is data, the resource allocation class determining unit 13 determines a non-subframe bundling class as the resource allocation class of the radio communication terminal 20. On the other hand, when the traffic type is voice, the resource allocation class determining unit 13 determines a subframe bundling class as the resource allocation class of the radio communication terminal 20.

Furthermore, the resource allocation class determining unit 13 may also determine the resource allocation class of the radio communication terminal 20 based on whether the traffic type acquired by the user information acquiring unit 12 is voice or video. In this case, when the traffic type is voice, the resource allocation class determining unit 13 determines a non-subframe bundling class as the resource allocation class of the radio communication terminal 20. On the other hand, when the traffic type is video, the resource allocation class determining unit 13 determines a subframe bundling class as the resource allocation class of the radio communication terminal 20.

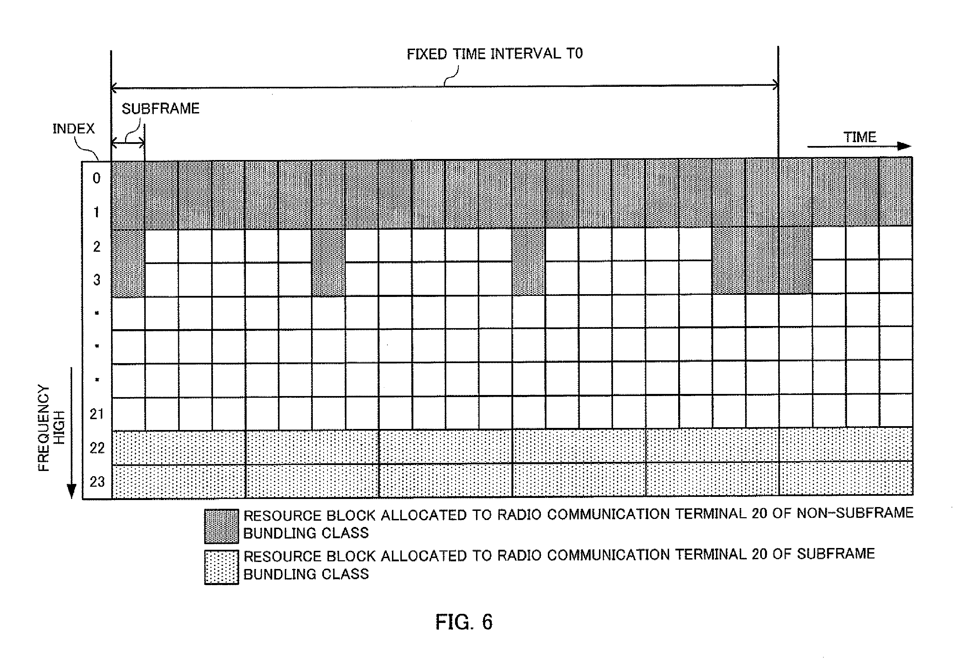

The index setting unit 14 sets indexes to resource blocks in the frequency domain. To be more specific, as shown in FIG.6, which will be described later, the index setting unit 14 sets indexes in ascending order of frequency starting with a resource block having the lowest frequency. On the other hand, the index setting unit 14 may also set indexes in descending order of frequency starting with a resource block having the highest frequency.

The resource allocation unit 15 allocates vacant resource blocks within a fixed time interval T0 to the radio communication terminal 20 in order starting with a resource block having an index value predetermined for each resource allocation class.

FIG.6 is a diagram illustrating an example of allocation of resource blocks according to the first embodiment. As shown in FlG.6, the resource allocation unit 15 allocates vacant resource blocks within a fixed time interval T0 to the radio communication terminal 20 of a non-subframe bundling class in order starting with a resource block having the smallest index value. On the other hand, the resource allocation unit 15 allocates vacant resource blocks within the fixed time interval T0 to the radio communication terminal 20 of a subframe bundling class in order starting with a resource block having the largest index value.

Furthermore, contrary to the above described order, the resource allocation unit 15 may also allocate vacant resource blocks within the fixed time interval T0 to the radio communication terminal 20 of a non-subframe bundling class in order starting with a resource block having the largest index value and to the radio communication terminal 20 of a subframe bundling class in order starting with a resource block having the smallest index value.

Furthermore, when there are a plurality of vacant resource blocks having index values predetermined for respective resource allocation classes within the fixed time interval T0, the resource allocation unit 15 may also allocate a resource block of the earliest subframe (time) to the radio communication terminal 20 or allocate a resource block of a subframe having the maximum number of vacant resource blocks in the frequency domain or allocate a resource block of a subframe having the minimum number of resource blocks allocated to the radio communication terminal 20 of the same resource allocation class.

The transmitting unit 16 transmits a downlink signal to the radio communication terminal 20 by using downlink DL resource blocks allocated by the resource allocation unit 15. Furthermore, the transmitting unit 16 transmits resource allocation information indicating uplink UL resource blocks allocated by the resource allocation unit 15 to the radio communication terminal 20.

### <Operation of radio communication

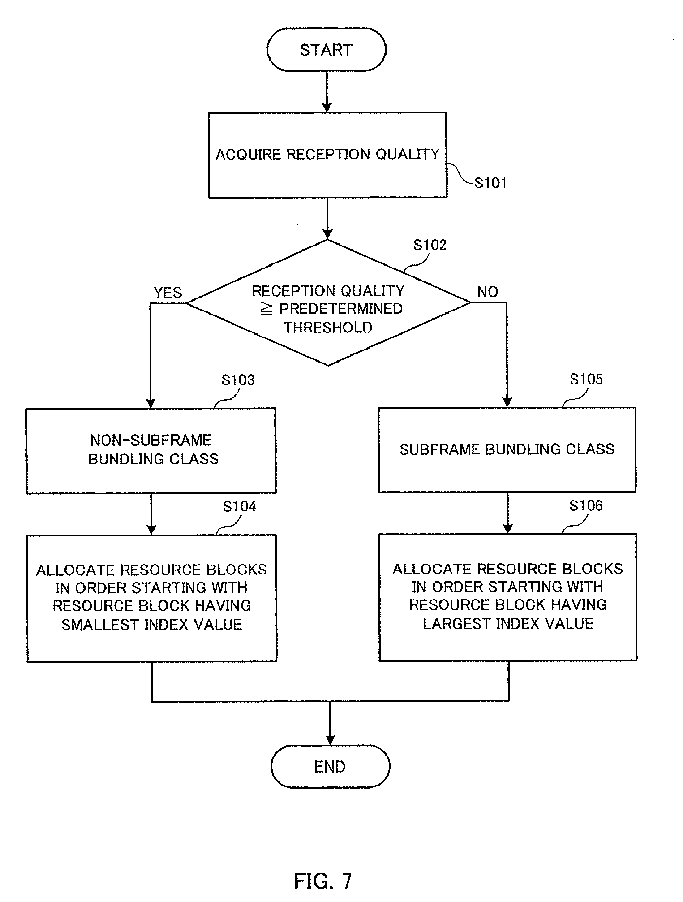

Next, operations of the radio communication system according to the first embodiment configured as shown above will be described. FIG.7 is a flowchart showing a resource block allocation method by the radio base station 10. The following flow is applicable to resource block allocation for any one of the uplink UL and downlink DL.

As shown in FIG.6, the index setting unit 14 is assumed to set indexes in ascending order of frequency starting with a resource block having the lowest frequency, but the index setting unit 14 may also set indexes in descending order of frequency starting with a resource block having the highest frequency as described above. Furthermore, a case will be described where a resource allocation class of the radio communication terminal 20 is determined based on received channel quality of a signal between the radio base station 10 and the radio communication terminal 20, but the resource allocation class may also be determined based on the traffic type as described above.

The user information acquiring unit 12 acquires received channel quality of a signal to/from the radio communication terminal 20 (step S101). The resource allocation class determining unit 13 determines whether the received channel quality acquired by the user information acquiring unit 12 is equal to or above a predetermined threshold (step S102).

When the received channel quality is equal to or above the predetermined threshold (step S102: Yes), since subframe bundling need not be applied to improve the received channel quality, the resource allocation class determining unit 13 determines a non-subframe bundling class as the resource allocation class of the radio communication terminal 20 (step S103). The resource allocation unit 15 allocates vacant resource blocks within the fixed time interval T0 to the radio communication terminal 20 of a non-subframe bundling class in order starting with a resource block having the smallest index value (step S104).

On the other hand, when the received channel quality is less than the predetermined threshold (step S102: No), since subframe bundling needs to be applied to improve the received channel quality, the resource allocation class determining unit 13 determines a subframe bundling class as the resource allocation class of the radio communication terminal 20 (step S105). The resource allocation unit 15 allocates vacant resource blocks within the fixed time interval T0 to the radio communication terminal 20 of the subframe bundling class in order starting with a resource block having the largest index value (step S106).

In the case of the uplink UL, allocation information indicating resource blocks allocated in step S105 or S106 is transmitted by the transmitting unit 16 to the radio communication terminal 20. The radio communication terminal 20 transmits an uplink signal by using resource blocks indicated by the received allocation information. On the other hand, in the case of the downlink, the radio base station 10 transmits a downlink signal by using resource blocks allocated in step S105 or S106.

### <Operations and

According to the radio communication system according to the first embodiment, it is possible to allocate vacant radio resources within the fixed time interval T0 in order starting with a resource block having an index value predetermined for each resource allocation class, and therefore when there is a mixture of a plurality of radio communication terminals 20 of different radio resource allocation patterns fixedly allocated at the fixed time interval T0, it is possible to prevent many vacant resource blocks that cannot be allocated to any radio communication terminal 20 from occurring and as a result, it is possible to prevent the system throughput from decreasing. Furthermore, it is possible to allocate consecutive bands to the radio communication terminal 20 that performs dynamic scheduling and thereby improve system throughput.

### [Modification example 1]

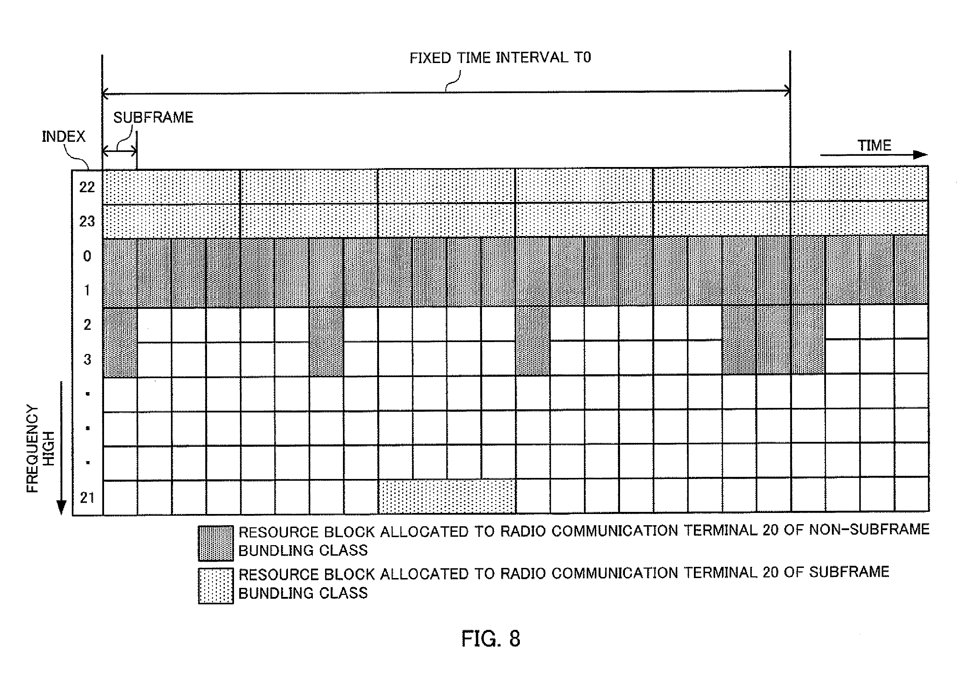

Next, modification example 1 of the radio communication system according to the first embodiment will be described. Modification example 1 is different from the first embodiment in that indexes are set starting with a resource block of a frequency different from that of the adjacent radio base station 10. FIG.8 is a diagram illustrating an example of setting indexes and an example of allocation of resource blocks according to modification example 1.

As shown in FIG.8, the index setting unit 14 of the radio base station 10 sets indexes in ascending order of frequency starting with a resource block of an arbitrary frequency different from that of the adjacent radio base station 10 (resource block having the third lowest frequency in FIG.8). Furthermore, the index setting unit 14 may set indexes in descending order of frequency starting with a resource block of an arbitrary frequency different from that of the adjacent radio base station 10.

According to the radio communication system according to modification example 1, since indexes can be set starting with a radio resource of a frequency different from that of the adjacent radio base station 10, it is possible to avoid allocation to the radio communication terminal 20 from concentrating on resource blocks of the same frequency between adjacent cells. As a result, it is possible to prevent interference between the adjacent radio base stations 10 from increasing and improve the system throughput.

### [Modification example 2]

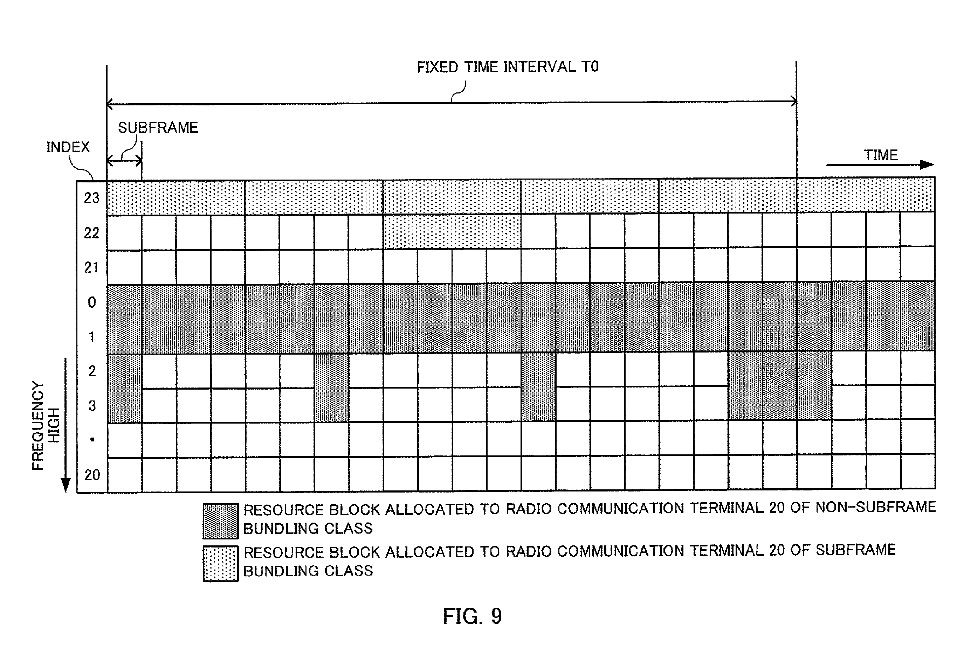

Next, modification example 2 of the radio communication system according to the first embodiment will be described. Modification example 2 is different from the first embodiment in that indexes are set so that resource blocks allocated to the radio communication terminals 20 of all resource allocation classes are concentrated on any one of a lower frequency domain and a higher frequency domain. FIG.9 is a diagram illustrating an example of setting indexes and an example of allocation of resource blocks according to modification example 2.

The index setting unit 14 of the radio base station 10 sets indexes so that resource blocks allocated to the radio communication terminals 20 of all resource allocation classes are concentrated on any one of a lower frequency domain and a higher frequency domain. To be more specific, as shown in FIG.9, the index setting unit 14 ensures a predetermined number of (three in FIG.9) resource blocks in the frequency domain from a resource block having the lowest frequency as resource blocks to be allocated to the radio communication terminal 20 of one resource allocation class (subframe bundling class in FIG.9). The index setting unit 14 sets indexes in ascending order of frequency starting with a resource block of the next lowest frequency after that of the ensured resource block (resource block having the fourth lowest frequency in FIG.9) and ending with a resource block having the highest frequency. After that, the index setting unit 14 sets indexes in descending order of frequency for resource blocks ensured for the one resource allocation class.

Furthermore, the index setting unit 14 may also ensure a predetermined number of resource blocks from a resource block having the highest frequency in the frequency domain as resource blocks to be allocated to the radio communication terminal 20 of one resource allocation class. In this case, the index setting unit 14 sets indexes in descending order of frequency starting with a resource block having the next highest frequency after the ensured resource block and ending with a resource block having the lowest frequency. After that, the index setting unit 14 sets indexes in ascending order of frequency for resource blocks ensured for the one resource allocation class.

The radio communication system according to modification example 2 can set indexes so that resource blocks allocated to the radio communication terminals 20 of all resource allocation classes are concentrated on any one of the lower frequency domain and the higher frequency domain (lower frequency domain in the example in FIG.9). Therefore, by concentrating allocation to the radio communication terminals 20 of all resource allocation classes on different frequency domains between adjacent cells, it is possible to avoid allocation from concentrating on the same frequency domain between adjacent cells. As a result, it is possible to prevent interference between the adjacent radio base stations 10 from increasing and improve the system throughput.

### [Modification example 3]

Next, modification example 3 of the radio communication system according to the first embodiment will be described. Modification example 3 is different from the first embodiment in that the resource allocation unit 15 allocates resource blocks to a plurality of radio communication terminals 20 of the same resource allocation class by using a plurality of different allocation patterns instead of the same allocation pattern.

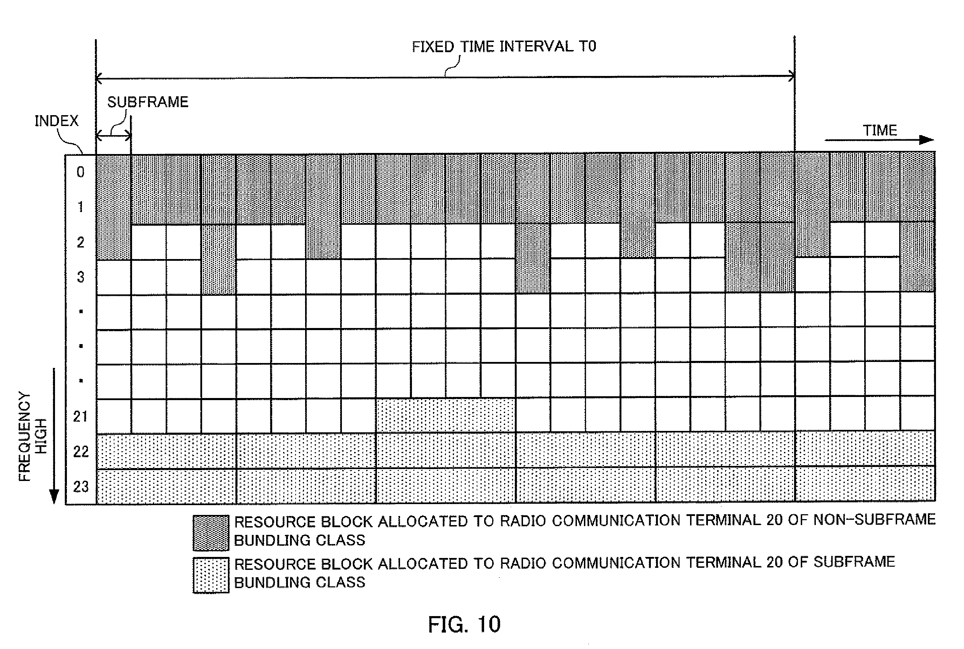

FIG.10 is a diagram illustrating an example of allocation of resource blocks according to modification example 3. As shown in FIG.10, the resource allocation unit 15 of the radio base station 10 allocates resource blocks to a plurality of radio communication terminals 20 of the same resource allocation class (non-subframe bundling class in FIG.10) by using different allocation patterns.

For example, in FIG.10, a first allocation pattern of fixedly allocating two consecutive resource blocks in the frequency domain and one subframe in the time domain at a fixed time interval T0, a second allocation pattern of fixedly allocating three consecutive resource blocks in the frequency domain and one subframe in the time domain at the fixed time interval T0 and a third allocation pattern of fixedly allocating one resource block in the frequency domain and four consecutive subframes in the time domain at the fixed time interval T0 are used.

ln FIG.10, the resource allocation unit 15 allocates vacant resource blocks within the fixed time interval T0 to the radio communication terminal 20 of a non-subframe bundling class in order starting with a resource block having the smallest index value by using any one of the first allocation pattern and the second allocation pattern. Furthermore, the resource allocation unit 15 allocates vacant resource blocks within the fixed time interval T0 to the radio communication terminal 20 of a subframe bundling class in order starting with a resource block having the largest index value by using the third allocation pattern.

In FIG.10, the resource allocation unit 15 uses two allocation patterns for a plurality of radio communication terminal 20 of a non-subframe bundling class, but may also use three or more allocation patterns. Furthermore, in FIG.10, the resource allocation unit 15 uses one allocation pattern (allocating one resource block in the frequency domain and four consecutive subframes in the time domain) for a plurality of radio communication terminals 20 of a subframe bundling class, but may also use two or more allocation patterns.

Furthermore, in FIG.10, the index setting unit 14 sets indexes in ascending order of frequency starting with a resource block having the lowest frequency, but may also set indexes in descending order of frequency starting with a resource block having the highest frequency. Furthermore, the index setting unit 14 may also set indexes as described in modification example 1 or modification example 2.

Since the radio communication system according to modification example 3 can use a plurality of different allocation patterns for the radio communication terminals 20 of the same resource allocation class, it is not necessary to distinguish a resource allocation class for each allocation pattern of resource blocks and it is possible to prevent vacant resource blocks that cannot be allocated to any radio communication terminal 20 from being likely to occur due to segmentation of resource allocation classes.

### [Second embodiment]

Next, a radio communication system according to a second embodiment will be described focused on differences from the first embodiment. The radio communication system according to the second embodiment is different from that of the first embodiment in that the radio base station 10 allocates resource blocks to the radio communication terminal 20 by applying frequency hopping.

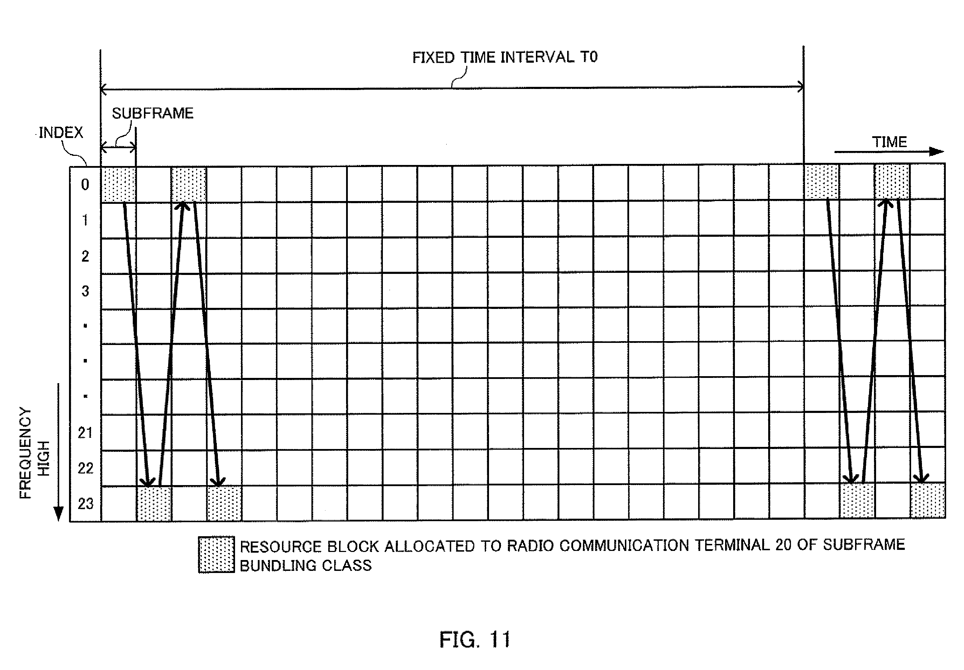

FIG.11 is a diagram illustrating an example of allocation of resource blocks using frequency hopping. As shown in FIG.11, the resource allocation unit 15 of the radio base station 10 allocates resource blocks of different frequencies in consecutive subframes by using a predetermined frequency hopping pattern, instead of allocating resource blocks of the same frequency in consecutive subframes, to the radio communication terminal 20 of a subframe bundling class. Here, the "frequency hopping pattern" indicates a method of allocating resource blocks in consecutive subframes.

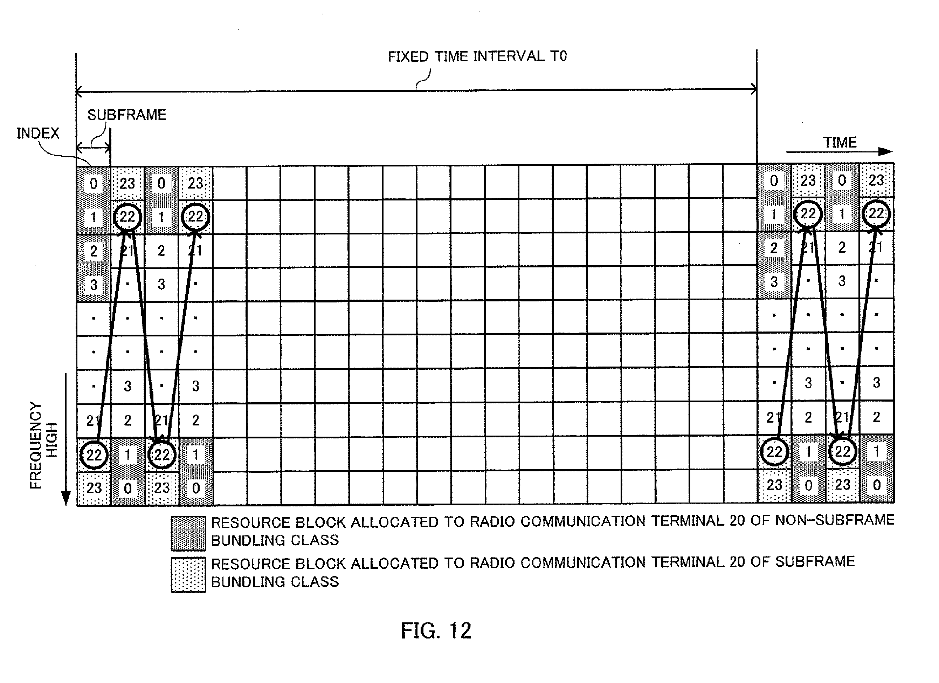

FIG.12 is a diagram illustrating an example of setting indexes and an example of allocating resource blocks when applying the frequency hopping shown in FIG.11. As shown in FIG.12, the index setting unit 14 of the radio base station 10 sets indexes differing from one subframe to another to resource blocks in the frequency domain based on a predetermined frequency hopping pattern.

To be more specific, as shown in FIG.12, the index setting unit 14 sets indexes in ascending order of frequency starting with a resource block having the lowest frequency in a first subframe. On the other hand, in a second subframe, the index setting unit 14 sets indexes in descending order of frequency starting with a resource block having the highest frequency. Hereinafter, in odd-numbered subframes, indexes are set using a method similar to that of the first subframe. On the other hand, in even-numbered subframes, indexes are set using a method similar to that of the second subframe.

The resource allocation unit 15 allocates vacant resource blocks within a fixed time interval T0 to the radio communication terminal 20 of a non-subframe bundling class in order starting with a resource block having the smallest index value. For example, in FIG.12, the resource allocation unit 15 allocates vacant resource blocks of the smallest index values, that is, resource blocks of the lowest frequencies in the first subframe and allocates vacant resource blocks of the smallest index values, that is, resource blocks of the highest frequencies in the second subframe.

On the other hand, the resource allocation unit 15 allocates vacant resource blocks within the fixed time interval T0 to the radio communication terminal 20 of a subframe bundling class in order starting with a resource block having the largest index value using a predetermined frequency hopping pattern. For example, in FIG.12, the resource allocation unit 15 allocates resource blocks having an index value of 22 to the radio communication terminal 20 of the subframe bundling class over four subframes by using a predetermined frequency hopping pattern.

The radio communication system according to the second embodiment can allocate resource blocks of different frequencies in consecutive subframes to the radio communication terminal 20 of the subframe bundling class using frequency hopping, and can thereby obtain a frequency diversity gain, and as a result, can improve received channel quality of a signal with respect to the radio communication terminal 20 of the subframe bundling class and improve the system throughput.

### [Third embodiment]

Next, a radio communication system according to a third embodiment will be described focused on differences from the first embodiment. The radio communication system according to the third embodiment is different from that of the first embodiment in that resource allocation classes are provided with priorities.

In the third embodiment, the resource allocation unit 15 of the radio base station 10 sets priorities to resource allocation classes. To be more specific, the resource allocation unit 15 may set higher priority to a resource allocation class of which received channel quality is relatively poor. For example, when received channel quality of a subframe bundling class is relatively poorer than received channel quality of a non-subframe bundling class, the resource allocation unit 15 sets higher priority to the subframe bundling class and when received channel quality of the non-subframe bundling class is relatively poorer than received channel quality of the subframe bundling class, the resource allocation unit 15 sets higher priority to the non-subframe bundling class.

The resource allocation unit 15 preferentially allocates vacant resource blocks within a fixed time interval T0 to the radio communication terminal 20 of a resource allocation class having higher priority based on the priority set as described above.

To be more specific, when a plurality of radio communication terminals 20 of different resource allocation classes are candidates for allocation of the same resource block, the resource allocation unit 15 preferentially allocates the resource block to the radio communication terminal 20 of a resource allocation class having higher priority.

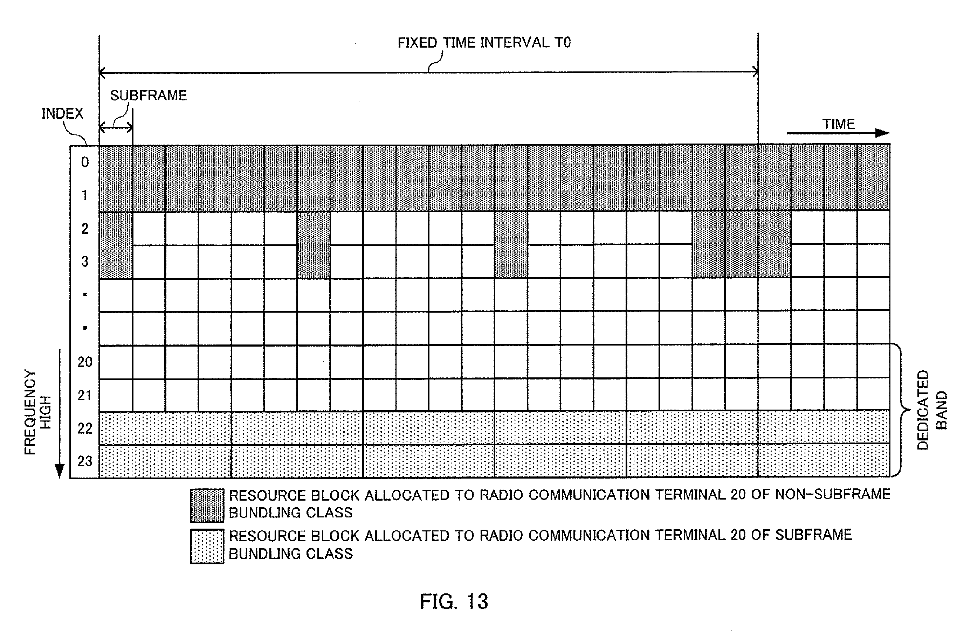

Furthermore, the resource allocation unit 15 may also provide a dedicated band for the resource allocation class having higher priority. FIG.13 is a diagram illustrating an example of allocation of resource blocks according to the third embodiment. In FIG.13, higher priority is set to a subframe bundling class than a non-subframe bundling class, and resource blocks having index values of 20 to 23 are set as bands dedicated to the subframe bundling class. In FIG.13, even when vacant resource blocks exist only in the dedicated band in the subframe bundling class, the resource allocation unit 15 does not allocate the resource blocks of the dedicated band to the radio communication terminal 20 of the non-subframe bundling class.

The radio communication system according to the third embodiment sets priorities in resource allocation classes, and can thereby preferentially allocate resource blocks to the radio communication terminal 20 of the subframe bundling class of which received channel quality is considered to be low.

### [Other embodiments]

The present invention has been described in detail using the above described embodiments, but it is apparent to those skilled in the art that the present invention is not limited to the embodiments described in the present specification. The present invention can be implemented as modified or altered embodiments without departing from the sprit and scope of the present invention defined in the scope of claims of the present invention. Therefore, the descriptions of the present specification are intended for illustrative purposes and have no restrictive meaning for the present invention.

## Claims

1. A radio base station for fixedly allocating a radio resource to a radio communication terminal at a fixed time interval, comprising:
an index setting unit configured to set an index to a radio resource in a frequency domain;
a resource allocation class determining unit configured to determine a resource allocation class of the radio communication terminal from among resource allocation classes which are classified according to radio resource allocation patterns fixedly allocated at the fixed time interval, based on user information of the radio communication terminal; and
a resource allocation unit configured to allocate a vacant radio resource within the fixed time interval to the radio communication terminal in order starting with a radio resource having an index value predetermined for the resource allocation class.

2. The radio base station according to claim 1, wherein the resource allocation classes are classified into a first resource allocation class and a second resource allocation class,
the resource allocation unit is configured to allocate a vacant radio resource within the fixed time interval to a radio communication terminal of the first resource allocation class in order starting with a radio resource having a smallest index value, and to allocate a vacant radio resource within the fixed time interval to a radio communication terminal of the second resource allocation class in order starting with a radio resource having a largest index value.

3. The radio base station according to claim 1, wherein the index setting unit is configured to set the index in ascending order of frequency starting with a radio resource having a lowest frequency or in descending order of frequency starting with a radio resource having a highest frequency.

4. The radio base station according to claim 1, wherein the index setting unit is configured to set the index in ascending order of frequency or in descending order of frequency starting with a radio resource of a frequency different from that of an adjacent radio base station.

5. The radio base station according to claim 1, wherein the index setting unit is configured to set the index so that radio resources allocated to radio communication terminals of all resource allocation classes are concentrated on any one of a lower frequency domain and a higher frequency domain.

6. The radio base station according to claim 1, wherein the index setting unit is configured to set the index for each subframe which is a unit of a radio resource in a time domain, based on a predetermined frequency hopping pattern.

7. The radio base station according to claim 1, wherein the resource allocation classes have priorities, and
the resource allocation unit is configured to preferentially allocate a vacant radio resource within the fixed time interval to a radio communication terminal of a resource allocation class having a higher priority.

8. The radio base station according to claim 1, wherein when there are a plurality of vacant radio resources having index values predetermined for respective resource allocation classes within the fixed time interval, the resource allocation unit is configured to allocate to the radio communication terminal any one of a radio resource of a earliest time, a radio resource of a time having maximum number of vacant radio resources in the frequency domain and a radio resource of a time having minimum number of radio resources allocated to radio communication terminals of same resource allocation class.

9. A radio resource allocation method in which a radio base station fixedly allocates a radio resource to a radio communication terminal at a fixed time interval, comprising:
setting an index to a radio resource in a frequency domain;
determining a resource allocation class of the radio communication terminal from among resource allocation classes which are classified according to radio resource allocation patterns fixedly allocated at the fixed time interval, based on user information of the radio communication terminal; and
allocating a vacant radio resource within the fixed time interval to the radio communication terminal in order starting with a radio resource having an index value predetermined for the resource allocation class.
